# EUROPEAN PATENT SPECIFICATION

(11) **EP 0 753 254 B1**
(45) Date of publication and mention of the grant of the patent: **16.02.2000**
(21) Application number: 96116048.8
(22) Date of filing: 29.03.1993
(51) Int. Cl.: A01C 23/04

(54) **Irrigation systems**
Bewässerungssysteme
Système d'irrigation

(30) Priority: 01.04.1992 IL 10144292
(43) Date of publication of application: 15.01.1997
(62) Divisional of application: 93105137.9
(73) Proprietor: HYDROPLAN ENGINEERING LTD., Tel-Aviv 61581 (IL)
(72) Inventor: Mehoudar, Rafael, Tel Aviv 69494 (IL)
(74) Representative: Beyer, Andreas, Dr.

(56) References cited:
- EP-A- 0 158 250
- CH-A- 604 474
- GB-A- 19 158 912

## Description

### FIELD OF THE INVENTION

This invention relates to irrigation systems, and in particular to drip irrigation systems.

### BACKGROUND OF THE INVENTION

Drip irrigation systems have now been known and used for many years on an increasingly large scale. Whilst some of the original proposals for the use of drip irrigation involved the laying of the irrigation pipes in the ground, this subterranean form of drip irrigation has not been generally adopted and most drip irrigation systems involve locating the drip irrigation conduits above ground. One of the main reasons for the hitherto relative lack of success in such subterranean drip irrigation systems is generally attributed to the fact that such systems are prone to blockage by plant roots which tend to grow in the direction of the water outlets of the system, thereby tending to block these outlets.

There have in the past been proposals to overcome this problem, for example by periodically injecting into the throughflowing irrigation flow a suitable herbicide. Whilst such herbicides can, in appropriate doses, selectively inhibit root growth, and thereby prevent or limit blockage of the water outlets by roots, the growth of the plant as a whole is not deteriously affected. If, however, for one reason or another the maximum dose of the herbicide is exceeded then, quite clearly, the plant as a whole may be damaged or destroyed. The difficulties inherent in ensuring that the dosage of the throughflowing irrigation flow does not exceed a prescribed level have limited the adoption of this proposal.

AU-A-33 135/78 discloses a system for distributing fertilizer to a tract of land in a desired concentration and at a controlled rate. Said system comprises a cartridge containing the fertilizer to be distributed which cartridge is connected in parallel to a fluid transfer line for delivering liquid to the tract of land.

EP-A-0 158 250 discloses a device for incorporation into an irrigation supply conduit upstream of the irrigation system. The device comprises a filter arranged within a filter casing. As a filtering element a mesh-like structure consisting of mono-filaments of synthetic material is employed.

It has furthermore been proposed (U.K. Patent Serial No. 2174884) to tackle this problem by providing for the use of drip emitter units which are formed of a plastics material which is wholly or in part impregnated with a herbicide material which is capable of being released into the irrigation water over a considerable period of time. This proposal is, however, subject to several major drawbacks. Thus, it is known that the release of such herbicides is very much dependent on environmental conditions in general, and on surrounding temperature in particular. For example, a rise in ambient temperature of 10° C can very much increase the rate of release of herbicide from the plastic material in which the herbicide is impregnated and this could lead to an undesirably high concentration of the herbicide in the soil with consequent damage to the plants.

Furthermore, seeing that the release of the herbicide from the plastic material takes place continuously and, as indicated above, this release is significantly accelerated by any rise in temperature, it will be apparent that such release will also take place during storage and transport. In consequence, and prior to the laying of the drip irrigation system in the ground, the emitters and/or any other components of the system which consist of or include such herbicide impregnated components, must be suitably packaged and enclosed if it is to be ensured that by the time the system is rendered operational, the herbicide content of the system will not have fallen below required levels. This requirement for suitable packaging and enclosing which can, of course, involve the packaging and enclosing of many hundreds of meters of irrigation piping, can be clearly complicated and costly.

Furthermore, it will be realized that the size of the emitter unit clearly determines the initial concentration of the herbicide in the unit and, in consequence, the amount of herbicide in a relatively small unit will be significantly less than that in a relatively large unit. It will therefore be necessary to determine the concentration of the herbicide in the plastics material, bearing in mind the size and surface area of the unit to be manufactured, and this clearly complicates the manufacture of such units.

Finally, with a drip irrigation system employing such emitter units, once the concentration of the herbicide in the system falls below a predetermined minimum there is no alternative but to replace the system as a whole, and this clearly is time-consuming and expensive.

The problems referred to above and, to a limited degree, the suggested solutions thereof, whilst relating particularly to drip irrigation, also arise from time to time in connection with other forms of irrigation, to which the present invention is also directed.

It is an object of the present invention to provide a new and improved irrigation system wherein the disadvantages involved in the hitherto-proposed solutions are substantially reduced or overcome. It is also an object of the present invention to provide a method for the controlled dosing of an irrigation flow with a herbicide, in which the disadvantages referred to above are substantially reduced.

### BRIEF SUMMARY OF THE INVENTION

According to the present invention there is provided an irrigation system comprising an irrigation supply conduit incorporating a filter having a filter casing. The filter casing contains filtering elements formed of herbicide impregnated material such that said herbicide impregnated material is located in line with said conduit and is designed to controllably release herbicide into the throughflowing liquid.

Preferably the system comprises a sealed container in which said herbicide impregnated material is located and which has a flow inlet designed to be flow-coupled to an upstream portion of the conduit and a flow outlet designed to be flow-coupled to a downstream portion of the conduit, with a flowpath in the container between the flow inlet and flow outlet extending through at least a major dimension of the container.

Further aspects and advantages of the present invention will be apparent from the following detailed description of a preferred embodiment when read in conjunction with the appended drawings.

### BRIEF SUMMARY OF THE DRAWINGS

For a better understanding of the present invention, and to show how the same may be carried out in practice, reference will now be made to the accompanying drawings, in which:
**Fig. 1** is a schematic plan view of a portion of an irrigation system in accordance with the present invention; and
**Fig. 2** is a side elevation of the same system.

### DETAILED DESCRIPTION OF PREFERRED EMBODIMENT

As seen in the drawings, a drip irrigation system in accordance with the invention comprises an irrigation supply line portion **1** through which there is an irrigation flow in the direction of an arrow **2**. The irrigation supply line portion **1** is designed to be coupled to a water supply source (not shown), whilst the irrigation line itself is in a region downstream to portion shown, is provided with drip emitters (not shown) and is designed to be buried in the ground. The irrigation supply line portion **1** is provided with a main flow valve **3** and an anti-siphoning device **4**. A bypass **5** is flow-coupled at an inlet **6** thereof to an upstream region of the irrigation line portion **1** and at an outlet **7** thereof to a downstream region of the irrigation supply line portion **1**. A flow resistance valve **8** is incorporated in the irrigation supply line portion **1** intermediate the regions thereof where it is flow-coupled to the bypass **5**. A sealed container **9** having an inlet **9a** thereof located in a lowermost portion of the container and an outlet **9b** thereof located in an uppermost portion of the container is flow-coupled to the bypass **5**. Located within the container is an exchangeable cartridge **10** comprising or containing a herbicide impregnated material **11** enclosed within a permeable envelope **12**. The container **9** is provided at its upper end with a thermally insulating closure plug **13**. Located within the bypass **5** upstream of the inlet **9a** is an upstream check valve **14**, whilst located within the bypass **5** downstream of the outlet **9b** is a downstream check valve **15** followed by a herbicide control valve **16**.

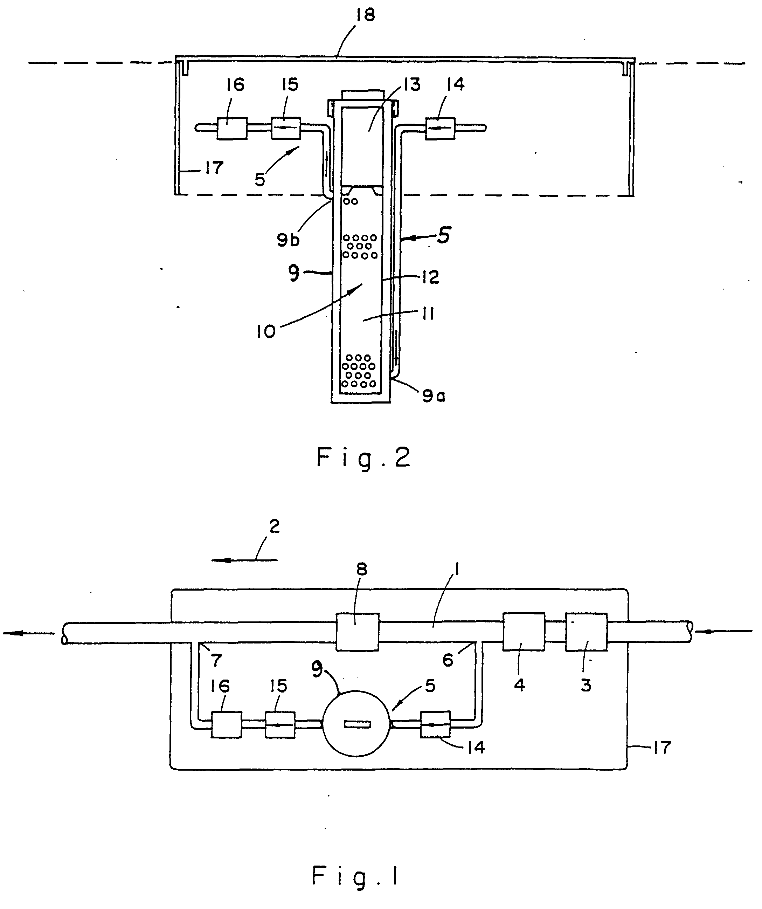

The bypass **5**, like the irrigation supply line portion **1** to which it is coupled, is, as shown in Fig. 2 of the drawings, located below ground level, whilst the portion of the container **9** enclosing the cartridge **10** is located within the ground. The bypass **5** and the associated irrigation supply line portion **1** are surrounded by a protective casing **17** having a removable lid **18**.

With the herbicide control valve **16** closed, all the irrigation flow passes through the irrigation supply line portion **1** and no dosing of the irrigation flow with herbicide occurs. Once the herbicide control valve **16** is opened and the flow resistance valve **8** in the main irrigation line is adjusted so as to ensure that a portion of the irrigation flow passes through the bypass **5**, this portion will flow via the upstream check valve **14** into the inlet **9a** in the container **9** and through the herbicide impregnated material **11**. During this throughflow, herbicide is released into the water, which emerges from the outlet **9b** of the container **9**, passes through the downstream check valve **15** and, via the herbicide control valve **16**, into the main irrigation supply line portion **1**, thereby effecting dosing of the irrigation flow through the main irrigation supply line portion **1**.

It will be readily seen that by controlling the valve **16**, the flow of the water through the bypass **5** into the main irrigation supply line portion **1** can be controlled, and in this way there can be carefully controlled the degree of dosing of the main irrigation flow through the irrigation supply line portion **1**. The provision of the anti-syphoning device **4** is designed to ensure that under no circumstances is there a back flow of dosed water into the main irrigation supply line portion **1**.

In the embodiment described above the provision of the bypass **5** with two check valves **14**, **15**, respectively upstream and downstream of the container **9** ensures that the container **9** is maintained in a relatively sealed condition when no water flows therethrough. It will be appreciated, however, that this requirement can be achieved where only one check valve **14** is provided upstream of the container **9** with the control valve **16** located downstream of the container **9**.

The provision of the herbicide impregnated material **11** in a sealed container **9** ensures that herbicide is not uncontrollably released into the ground when water flows therethrough, but all the dosed water has to pass through the herbicide control valve **16**.

Whilst in the embodiment described above the herbicide control valve **16** is located downstream of the container **9**, it will be appreciated that control of the degree of dosing can also be effected by having this control valve **16** upstream of the container **9**, seeing that also in that situation the amount of water flowing through the container **9** is controlled.

The herbicide impregnated material **11** can be in the form of herbicide impregnated granules located in a suitable permeable envelope **12**, or in any other suitable form having a large surface area exposed to the water. The cartridge may be constituted by a molded, permeable block of herbicide impregnated material which, in order to increase its exposed surface area, can be porous.

A suitable herbicide for use in accordance with the present invention can be constituted by the herbicide known by the trade name **TREFLAN**, for example those known as 2,6,dinitroanilines.

The material which is to be impregnated in a known manner by the herbicide can be constituted by synthetic polymers or rubbers. As an example, the concentration of the herbicide in the material impregnated thereby can lie between 5% to 25%, preferably 15%.

Where the material **11** is in the form of granules it is located within a perforated or net-like envelope **12** of any suitable material such as, for example, synthetic polymers or metal. Where the material is in the form of a moulded block it can, of course, be located directly in the container 9.

The container **9** can suitably be formed of a durable rust-resistant material such as, for example, stainless steel.

With such a system 1,000 cc of the known herbicide at a 15% concentration for use in a drip irrigation system having an overall discharge rate of 10 cubic meters per hour is effective for an extended period of time.

With a system as described and in accordance with the present invention, the dosing of the main irrigation flow with the herbicide can be at all times controlled. Furthermore, in view of the fact that the herbicide impregnated material is located within or can be constituted by discrete cartridges, these cartridges, after manufacture and assembly, can readily and easily be stored under conditions designed to prevent excessive release of herbicide prior to the installation in the irrigation system. Furthermore, once installed in the irrigation system, the fact that the cartridge is located in the earth ensures that it is effectively insulated against variations in ambient temperature which could give rise to differing rise of rates of release of the herbicide.

Once the level of release of herbicide from the cartridge falls below the desired level, the cartridge can readily and rapidly be replaced without in any way interfering with the irrigation system as a whole.

The irrigation supply line portion incorporates a filter and the herbicide impregnated material is located within the filter casing. The filtering elements of the filter are formed of herbicide impregnated material and in this way it is ensured that the filter fulfills a double function of filtering the through flowing water and at the same time dosing it with herbicide.

Whilst, as described above, the use of the invention has been particularly described with reference to a drip irrigation system, it will be appreciated that it could equally well be employed with other forms of irrigation systems requiring protection against uncontrolled root growth.

Furthermore, whilst the invention has been described with reference to the controlled dosing of an irrigation system with a herbicide by dosing a portion of the flow through the system into a bypass which includes herbicide impregnated material, the invention also extends to the situation where, under the appropriate circumstances, the entire irrigation flow is designed to flow through the herbicide impregnated material which is coupled in-line with the main irrigation flow. In this case, too, and where continuous control of the level of dosing is not so essential, considerable advantages may be obtained as compared with previously proposed disclosures, in that the herbicide impregnated material is confined to a distinct cartridge which can be protected against the effects of undesirable temperature variations and which can readily be replaced as required.

## Claims

1. An irrigation system comprising an irrigation supply conduit incorporating a filter having a filter casing, characterized in that the filter casing contains filtering elements formed of herbicide impregnated material (11) such that said herbicide impregnated material (11) is located in line with said conduit and is designed to controllably release herbicide into the throughflowing liquid.

2. An irrigation system according to claim 1,
characterized in that it furthermore comprises a sealed container (9) in which said herbicide impregnated material (11) is located and which has a flow inlet (9a) designed to be flow-coupled to an upstream portion of the conduit and a flow outlet (9b) designed to be flow-coupled to a downstream portion of the conduit, with a flowpath in the container (9) between the flow inlet (9a) and flow outlet (9b) extending through at least a major dimension of the container (9).

3. An irrigation system according to claims 1 or 2,
characterized in that said herbicide is constituted by 2,6,dinitroanilines.

4. An irrigation system according to any one of claims 1 to 3,
characterized in that the material to be impregnated by said herbicide is constituted by a synthetic polymer or rubber.

5. An irrigation system according to any one of claims 1 to 4,
characterized in that the concentration of the herbicide in the material impregnated thereby lies substantially between 5 % to 25 %.

6. An irrigation system according to claim 5,
characterized in that said concentration is substantially equal to 15 %.

7. For use as a filter in an irrigation system according to any one of claims 1 to 6, an elongated container (9) comprising a flow inlet (9a), a flow outlet (9b) and a flowpath in said container (9) between said flow inlet (9a) and said flow outlet (9b) extending through at least a major dimension of the container (9), characterized in that said container (9) contains herbicide impregnated material (11) constituted by granules enclosed in a permeable envelope (12) located within said container (9) or by a moulded permeable block of herbicide impregnated material which can be porous.

8. An elongated container according to claim 7,
characterized in that there is provided a thermally insulating sealing plug (13) for said container (9).

9. An elongated container according to claim 7, wherein said container constitutes a filter casing.

10. For use in an irrigation system according to any one of claims 1 to 6,
a filter comprising a filter casing and filtering elements, characterized in that said filtering elements are formed of a herbicide impregnated material.

## Patentansprüche

1. Bewässerungssystem mit einer ein Filter mit einem Filtergehäuse enthaltenden Bewässerungszufuhrleitung,
dadurch gekennzeichnet, daß das Filtergehäuse Filterelemente enthält, die aus mit Herbizid imprägniertem Material (11) gebildet sind, so daß das mit Herbizid imprägnierte Material (11) in Reihe mit der Leitung liegt und so ausgebildet ist, daß es steuerbar Herbizid an die durchfließende Flüssigkeit abgibt.

2. Bewässerungssystem nach Anspruch 1,
dadurch gekennzeichnet, daß es ferner einen abgedichteten Behälter (9) umfaßt, in dem das mit Herbizid imprägnierte Material (11) angeordnet ist, und der einen Strömungseinlaß (9a) aufweist, der so ausgebildet ist, daß er mit einem stromaufwärts gelegenen Teil der Leitung strömungsgekoppelt werden kann, und der einen Strömungsauslaß (9b) aufweist, der so ausgebildet ist, daß er mit einem stromabwärts gelegenen Teil der Leitung strömungsgekoppelt werden kann, wobei sich ein Strömungspfad in dem Behälter (9) zwischen dem Strömungseinlaß und dem Strömungsauslaß (9b) durch mindestens ein größeres Ausmaß des Behälters (9) erstreckt.

3. Bewässerungssystem nach Anspruch 1 oder 2,
dadurch gekennzeichnet, daß das Herbizid durch 2,6-Dinitroaniline gebildet ist.

4. Bewässerungssystem nach einem der Ansprüche 1 bis 3,
dadurch gekennzeichnet, daß das durch das Herbizid zu imprägnierende Material durch ein synthetisches Polymer oder Gummi gebildet ist.

5. Bewässerungssystem nach einem der Ansprüche 1 bis 4,
dadurch gekennzeichnet, daß die Konzentration des Herbizids in dem durch dieses imprägnierte Material im wesentlichen zwischen 5 % und 25 % liegt.

6. Bewässerungssystem nach Anspruch 5,
dadurch gekennzeichnet, daß diese Konzentration im wesentlichen gleich 15 % ist.

7. Länglicher Behälter (9) zur Verwendung als Filter in einem Bewässerungssystem gemäß einem der Ansprüche 1 bis 6, mit einem Strömungseinlaß (9a), einem Strömungsauslaß (9b) und einem Strömungspfad in dem Behälter (9) zwischen dem Strömungseinlaß (9a) und dem Strömungsauslaß (9b), der sich durch mindestens ein größeres Ausmaß des Behälters erstreckt, dadurch gekennzeichnet, daß der Behälter (9) mit Herbizid imprägniertes Material (11) enthält, das durch Körner gebildet ist, die in einer durchlässigen Umhüllung (12) eingeschlossen sind, die in dem Behälter (9) angeordnet ist, oder das durch einen durchlässigen Formblock von mit Herbizid imprägniertem Material gebildet ist, das porös sein kann.

8. Länglicher Behälter nach Anspruch 7,
dadurch gekennzeichnet, daß ein thermisch isolierender Abdichtstopfen (13) für den Behälter (9) vorgesehen ist.

9. Länglicher Behälter nach Anspruch 7, bei dem der Behälter ein Filtergehäuse darstellt.

10. Filter zur Verwendung in einem Bewässerungssystem nach einem der Ansprüche 1 bis 6, mit einem Filtergehäuse und Filterelementen,
dadurch gekennzeichnet, daß die Filterelemente aus einem mit Herbizid imprägnierten Material gebildet sind.

## Revendications

1. Système d'irrigation comprenant un conduit d'alimentation d'irrigation comprenant un filtre possédant un boîtier de filtre,
caractérisé en ce que le boîtier de filtre contient des éléments filtrants constitués d'un matériau imprégné d'herbicide (11) de telle façon que ledit matériau imprégné d'herbicide (11) soit en ligne avec ledit conduit et soit conçu pour libérer de façon régulée l'herbicide dans le liquide le traversant.

2. Système d'irrigation selon la revendication 1,
caractérisé en ce qu'il comprend de plus un récipient fermé hermétiquement (9) dans lequel ledit matériau imprégné d'herbicide (11) est placé et qui possède une entrée d'écoulement (9a) conçue communicant avec une partie amont du conduit et d'une sortie d'écoulement (9b) conçue communicant avec à une partie aval du conduit, avec un trajet d'écoulement dans le récipient (9) entre l'entrée d'écoulement (9a) et la sortie d'écoulement (9b) s'étendant à travers au moins une dimension principale du récipient (9).

3. Système d'irrigation selon les revendications 1 ou 2,
caractérisé en ce que ledit herbicide est constitué de 2,6,dinitroanilines.

4. Système d'irrigation selon l'une quelconque des revendications 1 à 3,
caractérisé en ce que le matériau à imprégner par ledit herbicide est constitué d'un polymère ou d'un caoutchouc synthétique.

5. Système d'irrigation selon l'une quelconque des revendications 1 à 4,
caractérisé en ce que la concentration de l'herbicide dans le matériau qu'il imbibe se situe sensiblement entre 5 % et 25 %.

6. Système d'irrigation selon la revendication 5,
caractérisé en ce que ladite concentration est sensiblement égale à 15 %.

7. Pour son utilisation comme filtre dans un système d'irrigation selon l'une quelconque des revendications 1 à 6, un récipient allongé (9) comprenant une entrée d'écoulement (9a), une sortie d'écoulement (9b) et un trajet d'écoulement dans ledit récipient (9) entre ladite entrée d'écoulement (9a) et ladite sortie d'écoulement (9b) s'étendant à travers au moins une dimension principale du récipient (9), caractérisé en ce que ledit récipient (9) contient un matériau imprégné d'herbicide (11) constitué par des granulés enfermés dans une enveloppe perméable (12) située à l'intérieur dudit récipient (9) ou par un bloc perméable moulé de matériau imprégné d'herbicide qui peut être poreux.

8. Récipient allongé selon la revendication 7,
caractérisé en ce qu'il y a un bouchon de fermeture thermiquement isolant (13) pour ledit récipient (9).

9. Récipient allongé selon la revendication 7, dans lequel ledit récipient constitue un boîtier de filtre.

10. Pour son utilisation dans un système d'irrigation selon l'une quelconque des revendications 1 à 6,
un filtre comprenant un boîtier de filtre et des éléments filtrants, caractérisé en ce que les éléments filtrants sont constitués d'un matériau imprégné d'herbicide.
